## Europäisches Patentamt

## European Patent Office

## Office européen des brevets

(19)

(11) Veröffentlichungsnummer: **0 109 491**
**B1**

(12)

# EUROPÄISCHE PATENTSCHRIFT

(45) Veröffentlichungstag der Patentschrift:
**12.08.87**

(21) Anmeldenummer: **83108492.6**

(22) Anmeldetag: **29.08.83**

(51) Int. Cl.⁴: **C 04 B 11/02,** C 04 B 11/024,
C 04 B 11/26, C 04 B 11/28

(54) **Verfahren zur Verbesserung der Fliess- und Förderfähigkeit von feuchten Calciumsulfat-Niederschlägen.**

(30) Priorität: **27.10.82 DE 3239768**

(43) Veröffentlichungstag der Anmeldung:
**30.05.84 Patentblatt 84/22**

(45) Bekanntmachung des Hinweises auf die Patenterteilung:
**12.08.87 Patentblatt 87/33**

(84) Benannte Vertragsstaaten:
**AT BE CH DE FR GB IT LI LU NL SE**

(56) Entgegenhaltungen:
**DE-B-1 269 022**
**FR-A-2 170 199**
**FR-A-2 354 297**

(73) Patentinhaber: **RUHR- STICKSTOFF AKTIENGESELLSCHAFT, Wittener Strasse 45, D-4630 Bochum 1 (DE)**

(72) Erfinder: **Kurandt, Hans- Friedrich, Dr., Wilhelm- Reinecke- Strasse 66, D-2120 Lüneburg (DE)**
Erfinder: **Kampner, Karl- Heinz, Schwarzer Kamp 12, D-2121 Embsen (DE)**

## Beschreibung

Bei vielen chemischen Prozessen fällt Calciumsulfat als Abfallprodukt an. So werden z. B. bei Phosphorsäure-Prozessen jährlich viele Millionen Tonnen Gips erzeugt, die, da eine wirtschaftliche Aufarbeitung nur bedingt möglich ist, meistens umweltbelastend als Abfall zu Deponien verbracht oder in Flüsse oder Wasserläufe oder direkt ins Meer eingeleitet werden müssen.

In zunehmenden Maße fällt auch Gips bei der Rauchgasentschwefelung an. Dabei wird das in den Abgasen der Kraftwerke vorhandene $SO_2$ mit Kalkmilch zunächst zu $CaSO_3$ gebunden und anschließend durch Oxidation in Gips umgewandelt.

Eine Verarbeitung des chemisch erzeugten Gipses ist zwar nach dem bisherigen Stand der Technik möglich, aber wirtschaftlich aus folgenden Gründen sehr aufwendig:

1. Das Material ist feuchter als Naturgips. Die neben dem Kristallwasser des Calciumsulfats vorhandene freie Feuchte beträgt normalerweise zwischen 5 und 30 Gew.%. Diese Restfeuchte bleibt im Produkt, weil es beim einfachen Filtrieren oder sonstigen Abtrennen des Niederschlages nicht gelingt, die anhaftenden Wassermengen restlos zu entfernen.

2. Das Fließverhalten des Materials ist ungünstig. Unter Umständen ist es thixotrop, so daß eine Förderung nicht möglich ist. Beispielsweise ist das Auslaufen aus Silos oder anderen konischen Bunkern kaum möglich, denn derartige Massen verhalten sich wie "schwerer", feuchter Ton, der nur mit erheblichem mechanischen Aufwand in seiner Form zu verändern ist.

3. Wegen der Verunreinigung des Materials ist eine Verwendung häufig nur nach besonderen Reinigungsoperationen (z. B. Waschen) möglich.

Die Weiterverarbeitung wurde bisher vor allem durch die unter 2. angeführten Förderschwierigkeiten beeinträchtigt. Es sind daher auch Maßnahmen entwickelt worden, vor dem eigentlichen Aufarbeiten den feuchten Gips zu pelletisieren oder zu brikettieren, um ihn so besser transportfähig werden zu lassen. Derartige Verfahren sind jedoch relativ aufwendig.

Von den bisher bekannten Verfahren zur Aufarbeitung von Phosphorsäuregipsen sind die Verfahren zu erwähnen, die zum Ziel haben, die noch vorhandene Säure ($H_2SO_4$, $H_3PO_4$ oder $HNO_3$ usw.) durch entsprechende Mengen $Ca(OH)_2$ CaO oder $CaCO_3$ bzw. durch die entsprechenden Magnesiumverbindungen zu neutralisieren. Bedingt durch die geringen Mengen derartiger Restsäuren kommt man dafür mit relativ geringen Zusätzen aus. Sie betragen gewöhnlich, bezogen auf die Gipsmenge, weniger als 5 % (vgl. z. B. DE-PS 1 157 128, Spalte 3, Zeile 49 - 52 und Spalte 4, Zeile 16 - 21 oder CS 154 355 nach CA 82 (1975) 34 518h).

Die Nachteile des schlechten Fließverhaltens von feuchten Di- und Hemihydrat-Gipsen werden durch diese Maßnahmen kaum reduziert.

Nach den US-A 1 967 959, 2 021 412, 2 063 488 und 2 127 952 ist bekannt, daß man aus aus Dihydrat bestehenden Naturgipsen durch Zumischen von gebranntem Kalk in Mengen von 1/2 bis 4 Mol CaO je Mol $CaSO_4 \cdot 2H_2O$ (vgl. US-A 2 063 488, Seite 1, linke Spalte, Zeile 41 und US-A 2 127 952, Seite 2, linke Spalte, Zeils 53) Halbhydrat und Anhydrit erhalten kann. Dabei wird zur Initiierung gegebsnenfalls Wasser als (Dampf), Flüssigkeit oder feuchte Salzbeimengung zugesetzt. Die Reaktionswärme der Hydratisierung des gebrannten Kalks sorgt dafür, daß dem Dihydrat Kristallwasser entzogen und außerdem aus dem feuchten Gemisch ein Teil des Wassers verdampft wird.

Derartige Naturgipse enthalten gewöhnlich nur sehr geringe Mengen von freier Feuchtigkeit, während die gemäß der Erfindung zu verarbeitenden Chemiegipse Feuchtigkeiten aufweisen, die dem Gehalt an Kristallwasser häufig gleichkommen und ihn teilweise auch übertreffen.

Durch Unterdruckfiltrieren oder durch Zentrifugieren gelingt es, den Gehalt an freier Feuchtigkeit in den Chemiegipsen auf 20 % und - bei genügender Zeit bzw. bei genügend hoher Fliehgeschwindigkeit - auch darunter zu reduzieren (vgl. Beispiel 1). Eine Verbesserung der Fließ- und Fordereigenschaften ist dabei jedoch nicht erzielbar, sondern nur eine gewisse Energieeinsparung.

Schließlich ist es gemäß FR-A 2 354 297 bekannt, feuchten Gips vor Calcinierung mit trockenen Calciumverbindungen zu pelletisieren, also oberflächlich zu umhüllen. Es tritt aber keine Reaktion der Zusatzverbindungen mit Wasser ein.

Da die bisher bekannten Verfahren zur Verbesserung der Fließ- und Förderfähigkeit von Chemiegipsen unbefriedigend oder zu aufwendig sind, ergibt sich die Aufgabe, durch möglichst einfache Maßnahmen und/oder Verfahrensschritte die Eigenschaften dieser Massenprodukte so zu verbessern, daß keine Schwierigkeiten bei der Aufarbeitung mehr auftreten.

Überraschenderweise hat sich nun gezeigt, daß die Nachteile der schlechten Fließ- und Rieselfähigkeit von feuchten Calciumsulfat-Niederschlägen mit mehr als 5 % Wasser dadurch beseitigt werden können, daß dem Material gegebenenfalls nach Durchführung einer entsprechenden Vorentwässerung auf mindestens unter 25 % bzw. unter 12 %-Calciumoxid (gebrannter Kalk = CaO) und/oder gebrannter Dolomit (CaO + MgO) in Mengen von mindestens 10 %, vorzugsweise von 15 - 60 Gew.%, zugesetzt und das Gemisch homogenisiert wird. Zweckmäßigerweise werden diese Zusatzstoffe in feingemahlener Form zugegeben. Grobanteile von mehr als 0,5 mm sind gegebenenfalls vor dem Einsatz abzutrennen und erneut aufzumahlen.

Gegenstand der Erfindung ist daher ein Verfahren gemäß Anspruch 1. Vor Zusatz der Erdalkalioxide unterwirft man zweckmäßigerweise die Calciumsulfat-Niederschläge, die mehr als 25 % freies Wasser bzw. mehr als 12 - 25 % besitzen, einer Vorentwässerung.

Ein Teil des zu brennenden Kalksteins und/oder Dolomits kann auch durch Magnesit ersetzt werden, bzw. es können entsprechende Mengen gebrannter Magnesit zu den genannten calcinierten Rohstoffen zugesetzt werden.

Die so erhaltenen Gemische aus Erdalkalioxiden und Calciumsulfat-Niederschlägen besitzen folgende Eigenschaften:

1. Sie sind völlig fließfähig, so daß sie ohne Schwierigkeiten gelagert und/oder gefördert werden können. Das Wiederentfernen aus Silos bereitet keine Schwierigkeiten.

2. Die im Feuchtgips vorhandenen Verunreinigungen werden durch die Erdalkalioxide, insbesondere durch CaO, gebunden, z. B. wasserlösliches $P_2O_5$ oder $F^-$ als die entsprechenden unlöslichen Calciumsalze. Die Magnesiumoxide dürften durch Doppelsalzbildung ebenfalls zur Eliminierung der störenden Verunreinigungen beitragen.

3. Der Gehalt an Kristallwasser der Gipsanteile des Gemisches wird beim Vermischen nicht (oder nur in beschränktem Maße) verändert, der Gehalt an freier Feuchtigkeit wird dabei jedoch - teils infolge chemischer Bindung zu $Ca(OH)_2$ und/oder $Mg(OH)_2$, teils infolge der bei diesem "Löschen" der Erdalkalioxide freiwerdenden Wärme, bzw. der durch sie ausgelösten Verdampfung - erheblich reduziert.

4a. Geht man bei diesen Gemischen von Hemihydrat oder von Anhydrit aus, dann ist ein Nachbrennen nicht mehr erforderlich, sondern hochstens der Zusatz gewisser Abbinde-Beschleuniger, wie beispielsweise Stuckgips oder Kaliumsulfat. Es ist aber nicht mehr erforderlich, zusätzliche thermische Energie aufzuwenden.

4b. Bei Dihydrat als Ausgangsprodukt ist zwar ein Brennen des Gemisches erforderlich (Dihydrat → Hemihydrat), aber auch in diesem Fall ergeben sich infolge der reduzierten Gehalte an freier Feuchtigkeit erhebliche Energieeinsparungen. Infolge der nach der Behandlung mit CaO bereits im Gemisch vorhandenen Mengen an $Ca(OH)_2$ ist der bei konventionell gebrannten Dihydratgipsen erforderliche $Ca(OH)_2$-Zusatz nicht mehr notwendig.

Das erfindungsgemäße Verfahren ermöglicht also durch die Verbesserung der Fließ- und Forderfähigkeit von Abfallstoffen in einfacher Weise deren Verwertung und dadurch das Freiwerden bzw. Nichtentstehen entsprechender Deponien bzw. eine Nichtbelastung des Abwassers. Aus den bisherigen Abfallprodukten lassen sich dabei in wirtschaftlich günstiger Weise wertvolle Baustoffe für die Bauindustrie gewinnen.

Das Untermischen der erfindungsgemäßen Zusatzstoffe kann z. B. so erfolgen, daß das feuchte, schwer zu handhabende Material zunächst in einem Paddelmischer mit der erforderlichen CaO-Menge grob vorgemischt und dann nach kurzer Einwirkungszeit in einem Feinmischer nachgemischt wird. Die Mischung kann aber auch in einem arbeitsgang erfolgen.

Nach der Behandlung kann das Material direkt zum Verbraucher transportiert oder aber in Bunkern beliebiger Bauart zwischengelagert werden. Förder- oder Transportschwierigkeiten bestehen nicht mehr, das Material ist voll rieselfähig.

Chemiegipse mit Gehalten unter 25 % freiem Wasser kann man im allgemeinen ohne zusätzliche Vorbehandlung dem erfindungsgemäßen Zusatz von CaO unterwerfen. Gipse mit höherem Wassergehalt sollte man - zur Verminderung der sonst erforderlichen erhöhten Mengen an dem relativ teuren CaO - vorher durch Saugfiltration oder entsprechendes Zentrifugieren vorentwässern.

Das ist aus dem genannten Grund gegebenenfalls auch bei Gehalten von 12 bis 25 % freiem Wasser, bezogen auf $CaSO_4 \cdot 2H_2O$ bzw. $CaSO_4 \cdot 1/2 H_2O$ bzw. $CaSO_4$, zweckmäßig.

Beim Abscheiden aus wässriger Lösung wird im allgemeinen entweder $CaSO_4 \cdot 2H_2O$ oder $CaSO_4 \cdot 1/2 H_2O$ vorliegen.

$CaSO_4$ entsteht gewöhnlich nur bei extremen Filtrierbedingungen (Temperaturen $> 100°C$ und hohen Säuregehalten). Es wird daher meistens nur in untergeordneten Mengen (neben dem Hemihydrat) anfallen. Derartige Gemische sind im allgemeinen zu behandeln und zu verwenden wie Hemihydrat. Unter Umständen ist zu empfehlen, die Mengen an Abbinde-Beschleunigern zu erhöhen bzw. weitere Aktivatoren zuzusetzen.

Praktisch 100 %iges Anhydrit fällt als sogenannter Abbrand der Flußsäureproduktion, d.h. bei der Umsetzung von Flußspat mit konzentrierter Schwefelsäure, an. Das dabei sich bildende Calciumsulfat entsteht nicht als Fällung aus wässriger Lösung, sondern durch direkte Umsetzung in Gegenwart nur untergeordneter Mengen Wasser, so daß der darin vorliegende Gehalt an freiem Wasser gewöhnlich weit unter 3 % liegt. Solche Produkte können nicht als feuchte Calciumsulfat-Niederschläge bezeichnet werden. Sie stehen daher den ebenfalls wasserarmen Naturgipsen näher und liegen daher - wie diese - außerhalb des Anwendungsbereiches der vorliegenden Erfindung.

Aus den Vorversuchen hat sich ergeben, daß man in bezug auf sparsamen Einsatz der Erdalkalioxide und der Erzielung optimaler Rieselfähigkeit - am günstigsten 0,5 bis 0,9 Mol Erdalkalioxide je Mol freies Wasser imgegebenenfalls vorentwässerten - feuchten Calciumsulfat-Niederschlag zumischt.

## Beispiele:

1. (Nicht erfindungsgemäß)
$CaSO_4 \cdot 2H_2O$ aus der Phosphorsäureherstellung mit einem Gehalt an 30 % freiem Wasser wird durch Zentrifugieren auf einen Gehalt an 9 % freiem Wasser entwässert. Das Produkt war sowohl vor als auch nach der Entwässerung nicht fließfähig.

2. Der Dihydratgips entsprechend Beispiel 1 wurde auf einem Saugfilter bis zu einem Gehalt von 19 % freiem Wasser entwässert. Das nicht rieselfähige Produkt wurde mit 30 % CaO gemischt und war nach der Behandlung voll rieselfähig.

3. $CaSO_4 \cdot 2H_2O$ aus der Rauchgasentschwefelung mit einem freien Wassergehalt von 7 % wurde mit 15 % CaO vermischt. Das entstehende Produkt ist gut fließfähig.

4. Unreines Calciumsulfat-Hemihydrat, $CaSO_4 \cdot 1/2\ H_2O$ aus der Phosphorsäureproduktion mit einem freien Wassergehalt von 15 % wurde mit 40 % CaO versetzt. Das entstehende Produkt ist voll rieselfähig. Es läßt sich - gegebenenfalls nach Vormahlung - auch pneumatisch fordern.

## Verwendungsmöglichkeiten der Gemische nach den Beispielen 2 - 4

Beispiele 2 + 3: Die Gemisch eignen sich ohne zusätzliche Behandlung u.a. als Abbindeverzögerer in der Zementindustrie. Weitere Aufarbeitungsmöglichkeiten und die Vorteile des erfindungsgemäßen Verfahrens bei Dihydratgipsen wurden bereits im Abschnitt 4b beschriebem.

Beispiel 4: Das Gemisch kann ohne zusätzliche Brenn- oder Reinigungsoperationen sowohl als Putzgips als auch zur Herstellung von Zwischenwandplatten verwendet werden. Der Einsatz zu Stuckgips mit der gegebenenfalls erforderlichen Zumischung von Abbinde-Beschleunigern wurde bereits im Abschnitt 4a beschrieben.

## Patentansprüche

1. Verbesserung der Fließ- und Fördereigenschaften von feuchten Calciumsulfat-Niederschlägen mit Gehalten an freiem Wasser von mehr als 5 Gew.%,
dadurch gekennzeichnet,
daß man diesen gebrannten Kalk (CaO) und/oder gebrannten Dolomit (CaO + MgO) in feingemahlener Form in Mengen von mindestens 10 bis 60 Gew.% bezogen auf den $CaSO_4$-Gehalt zusetzt und diese Mischung homogenisiert.

2. Verfahren nach Anspruch 1,
dadurch gekennzeichnet,
daß man vor dem Zusatz der Erdalkalioxide mindestens die Niederschläge, die mehr als 25 % freies Wasser enthalten, einer Vorentwässerung, beispielsweise durch Saugfiltrieren oder Zentrifugieren, unterwirft.

3. Verfahren nach Anspruch 1,
dadurch gekennzeichnet,
daß man auch die Calciumsulfat-Niederschläge, die freie Wassergehalte von 12 bis 25 % besitzen, einer Vorentwässerung nach Anspruch 2 unterwirft.

4. Verfahren nach den Ansprüchen 1 bis 3,
dadurch gekennzeichnet,
daß die Calciumsulfat-Niedsrschläge aus Dihydrat-Gips ($CaSO_4 \cdot 2H_2O$) bestehen.

5. Verfahren nach den Ansprüchen 1 bis 3,
dadurch gekennzeichnet,
daß die Calciumsulfat-Niederschläge aus Hemihydrat-Gips ($CaSO_4 \cdot 1/2\ H_2O$) bestehen.

6. Verfahren nach den Ansprüchen 1 bis 3,
dadurch gekennzeichnet,
daß die Calciumsulfat-Niederschläge aus Anhydrit-Gips ($CaSO_4$) bestehen.

7. Verfahren nach den Ansprüchen 1 bis 3,
dadurch gekennzeichnet,
daß die Calciumsulfat-Niederschläge aus zwei oder drei der in den Ansprüchen 4 bis 6 genannten Verbindungen bestehen.

8. Verwendung der nach den Ansprüchen 1 bis 3 und 5 und/oder 6 erhaltenen Gemische, gegebenenfalls nach Zumischen bekannter Abbinde-Beschleuniger, jedoch ohne zusätzliches Brennen, als Putzgips und/oder zum Herstellen von Gipswandplatten.

## Claims

1. Improvement of the flow and conveying properties of moist calcium sulphate precipitates containing more than 5 % by weight of free water, characterized in that burnt lime (CaO) and/or burnt dolomite (CaO + MgO) in a finely ground form is added in quantities of at least 10 to 60 % by weight, relative to the $CaSO_4$ content, to the precipitates and this mixture is homogenized.

2. Process according to Claim 1, characterized in that, before the addition of the alkaline earth metal oxides, at least the precipitates which contain more than 25 % of free water are subjected to a pre-dehydration, for example by suction filtration or centrifugation.

3. Process according to Claim 1, characterized in that calcium sulphate precipitates, which have free water contents of 12 to 25 %, are also subjected to a predehydration according to Claim 2.

4. Process according to Claims 1 to 3, characterized in that the calcium sulphate precipitates consist of dihydrate gypsum ($CaSO_4 \cdot 2H_2O$).

5. Process according to Claims 1 to 3, characterized in that the calcium sulphate precipitates consist of hemihydrate gypsum

($CaSO_4 \cdot 1/2 \, H_2O$).

6. Process according to Claims 1 to 3, characterized in that the calcium sulphate precipitates consist of anhydrite gypsum ($CaSO_4$).

7. Process according to Claims 1 to 3, characterized in that the calcium sulphate precipitates consist of two or three of the compounds mentioned in Claims 4 to 6.

8. Use of the mixtures obtained according to Claims 1 to 3 and 5 and/or 6, if appropriate after admixture of known setting accelerators, but without additional burning, as wall plaster and/or for the production of gypsum partition panels.

## Revendications

1. Procédé pour ameliorer les proprietes d'écoulement et de transport de précipités humides de sulfate de calcium d'une teneur en eau libre supérieure à 5 % en poids, procédé caractérisé en ce que on ajoute à ces précipités de la chaux calcinée (CaO) et/ou de la dolomite calcinée (CaO + MgO) sous forme finement pulvérisée, en des quantités d'au moins 10 à 60 % en poids rapportées à la teneur en $CaSO_4$, et on homogeneise ce mélange.

2. Procédé selon la revendication 1, caractérisé en ce que, avant d'ajouter l'oxyde alcalinoterreux, on soumet les précipités, contenant plus de 25 % d'eau libre, à au moins une déshydratation préalable, par exemple par filtration sous aspiration ou par centrifugation.

3. Procédé selon la revendication 1, caractérisé en ce qu'on soumet également les précipités de sulfate de calcium, contenant de 12 à 25 % d'eau libre, à une déshydratation préalable selon la revendication 2.

4. Procédé selon les revendications 1 à 3, caractérisé en ce que les précipités de sulfate de calcium sont constitués de gypse dihydraté ($CaSO_4 \cdot 2H_2O$).

5. Procédé selon les revendications 1 à 3, caractérisé en ce que les précipités de sulfate de calcium sont constitués de gypse hémihydraté ($CaSO_4, \frac{1}{2} H_2O$).

6. Procédé selon les revendications 1 à 3, caractérisé en ce que les précipités de sulfate de calcium sont constitués de gypse anhydre ($CaSO_4$).

7. Procédé selon les revendications 1 à 3, caractérisé en ce que les précipités de sulfate de calcium sont constitués de deux ou trois des combinaisons mentionnées dans les revendications 4 à 6.

8. Mise en oeuvre des mélanges obtenus selon les revendications 1 à 3 et 5, et/ou 6, éventuellement après addition à ces mélanges d'accélérateurs de prise connus, mais toutefois sans calcination supplémentaire, comme plâtres d'enduit ou pour la réalisation de plaques de parois en plâtre.